(19) Europäisches Patentamt / European Patent Office / Office européen des brevets

(11) **EP 3 670 569 A1**

(12) **EUROPÄISCHE PATENTANMELDUNG**

(43) Veröffentlichungstag:
**24.06.2020 Patentblatt 2020/26**

(21) Anmeldenummer: **18215195.1**

(22) Anmeldetag: **21.12.2018**

(51) Int Cl.:
**C08G 63/08** (2006.01)     **C08G 63/82** (2006.01)
**C08G 63/87** (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **VERFAHREN ZUR HERSTELLUNG EINES POLYESTERS**

(57)     Gegenstand der Erfindung ist ein Verfahren zur Herstellung von Polyestern durch Umsetzung einer H-funktionellen Startersubstanz mit einem Lacton in Gegenwart eines Brönsted-sauren Katalysators umfassend das Vorlegen der H-funktionellen Startersubstanz und des eines Brönsted-sauren Katalysators unter Bildung einer Mischung i) und anschließender Zugabe des Lactons zur Mischung i), wobei das Verfahren ohne Zusatz eines aromatischen Lösungsmittels durchgeführt wird, und wobei die H-funktionelle Startersubstanz eine OH-funktionelle Startersubstanz und/oder eine COOH funktionelle Startersubstanz ist. Ein weiterer Gegenstand sind Polyester erhältlich nach dem erfindungsgemäßen Verfahren.

EP 3 670 569 A1

**Beschreibung**

Gegenstand der Erfindung ist ein Verfahren zur Herstellung von Polyestern durch Umsetzung einer H-funktionellen Startersubstanz mit einem Lacton in Gegenwart eines Brönsted-sauren Katalysators umfassend das Vorlegen der H-funktionellen Startersubstanz und eines Brönsted-sauren Katalysators unter Bildung einer Mischung i) und anschließender Zugabe des Lactons zur Mischung i), wobei das Verfahren ohne Zusatz eines aromatischen Lösungsmittels durchgeführt wird, und wobei die H-funktionelle Startersubstanz eine OH-funktionelle Startersubstanz und/oder eine COOH funktionelle Startersubstanz ist. Ein weiterer Gegenstand sind Polyester erhältlich nach dem erfindungsgemäßen Verfahren.

In US5032671 wird ein Verfahren zur Herstellung von polymeren Lactonen durch Umsetzung einer H-funktionellen Startersubstanz und Lactonen in Gegenwart eines Doppelmetallcyanid-(DMC)-Katalysators offenbart. In den Ausführungsbeispielen werden hierbei die Umsetzung von Polyetherpolyolen mit ε-Caprolacton, δ-Valerolacton oder β-Propiolacton zu Polyether-Polyesterpolyol Blockcopolymeren offenbart, wobei diese Reaktionen in Gegenwart hoher Mengen von 980 ppm bis 1000 ppm des Cobalt-haltigen DMC-Katalysators und in Gegenwart von organischen Lösungsmitteln durchgeführt wird, wobei die resultierenden Produkte eine breite Molmassenverteilung von 1.32 bis 1.72 aufweisen. Zudem ist in diesem Verfahren ein Aufarbeitungsschritt notwendig, bei dem die Produkte über Diatomeenerde filtriert und anschließend das Lösungsmittel entfernt wird. Für die Umsetzung des Polyetherpolyols mit β-Propiolacton wird wird lediglich die Bildung eines resultierenden Polyesters mit einer Molmasse von 10000 g/mol postuliert. Zudem ist in diesem Verfahren ein Aufarbeitungsschritt notwendig, bei dem die Produkte über Diatomeenerde filtriert und anschließend das Lösungsmittel entfernt wird.

In WO2008/104723 A1 wird ein Verfahren zur Herstellung eines Polylactons oder Polylactams offenbart, bei dem das Lacton oder Lactam mit einer H-funktionellen Startersubstanz in Gegenwart eines nicht-chlorierten, aromatischen Lösungsmittels und einer Sulfonsäure im Mikroliter-Maßstab umgesetzt wird. Hierbei werden als H-funktionelle Startersubstanz niedermolekulare monofunktionelle oder polyfunktionelle Alkohole oder Thiole verwendet, wobei in den Ausführungsbeispielen (monofunktionelles) n-Pentanol, mit ε-Caprolacton oder δ-Valerolacton in Gegenwart von hohen Mengen an Trifluormethansulfonsäure von 1 mol-% -10 mol% offenbart ist.

In Couffin et al. Poly. Chem 2014, 5, 161 wird eine selektive O-Acyl Öffnung von Beta-Butyrolacton an H-funktionelle Startersubstanzen wie beispielsweise Penthanol, 1,4-Butandiol und Polyethylenglycolen in deuteriertem Benzol und in Gegenwart von Trifluormethansulfonsäure im offenbart, wobei alle Reaktionskomponenten vorgelegt worden sind und anschließend umgesetzt werden (Batch-Modus). Hierbei werden die Umsetzungen im Mikrolitermaßstab durchgeführt und dabei hohe Mengen des Säurekatalysators 1 mol-% - 5 mol% bezogen auf die Menge an eingesetztem Lacton verwendet.

In GB1201909 wird ebenfalls ein Verfahren zur Herstellung von Polyestern durch Umsetzung eines Lactons mit einer H-funktionellen Starterverbindung in Gegenwart einer organischen Carbon- oder Sulfonsäure, deren pKs-Wert bei 25 °C kleiner als 2.0 ist, offenbart. Hierbei wurden alle Reaktionskomponenten wie kurzkettige Alkohole sowie ε-Caprolacton oder Mischungen aus isomeren Methyl-epsilon Caprolactonen in hohen Mengen an Trichlor- oder Trifluoressigsäurekatalysator vorgelegt und im batch -Verfahren für mindestens 20 Stunden umgesetzt, wobei Feststoffe oder flüssige Produkt resultierten.

Es war daher Aufgabe der vorliegenden Erfindung ein vereinfachtes und technisch -effizienteres Verfahren zur Herstellung von Polyestern bereitzustellen, welches die Nachteile des Herstellungsverfahren des Standes der Technik abhilft.

Hierbei sollen die Umsetzung in Gegenwart von möglichst geringen Mengen eines hochreaktiven, schwermetall-freien Katalysatoren zu den gewünschten Polyester-Produkten erfolgen, wobei auf die Verwendung von aromatischen Lösungsmitteln verzichtet werden soll, so dass möglichst keine Abtrennung der Katalysatoren und/oder Lösungsmitteln vor der Weiterverarbeitung notwendig ist. Darüber hinaus soll die literaturbekannte Bildung von unerwünschten ungesättigten Nebenprodukten wie beispielsweise Crotonsäuren durch Umlagerungs- und Eliminierungsreaktion reduziert werden.

Ein weiterer Aspekt ist die Bereitstellung eines sicheren und aufskalierbaren Herstellungsverfahrens durch eine verbesserte Verfahrenskontrolle, beispielsweise durch Reduktion von starken Exothermien während der Umsetzung der Reaktionskomponenten zum Polyester um die Prozesskontrolle zu verbessern.

Überraschend wurde gefunden, dass die erfindungsgemäße Aufgabe gelöst wird durch Verfahren zur Herstellung eines Polyesters durch Umsetzung einer H-funktionellen Startersubstanz mit einem Lacton in Gegenwart eines Brönsted-sauren Katalysators umfassend folgende Schritte:

    i) Vorlegen der H-funktionellen Startersubstanz und des Brönsted-sauren Katalysators unter Bildung einer Mischung i);
    ii) Zugabe des Lactons zur Mischung i);

wobei das Verfahren ohne Zusatz eines aromatischen Lösungsmittels durchgeführt wird;
und wobei die H-funktionelle Startersubstanz eine OH-funktionelle Startersubstanz und/oder eine COOH funktionelle Startersubstanz ist.

H-funktionelle Startersubstanz

Im erfindungsgemäßen Verfahren wird eine OH-funktionelle Startersubstanz und/oder eine COOH funktionelle Startersubstanz verwendet. Hierbei ist unter einer OH-funktionellen Startersubstanz eine Verbindung mit mindestens einer freien Hydroxylgruppe und unter einer COOH funktionellen Startersubstanz eine Verbindung mit mindestens einer freien Carboxygruppe zu verstehen.

Als H-funktionelle Startersubstanz können beispielsweise eine oder mehrere Verbindungen ausgewählt werden aus der Gruppe umfassend ein- oder mehrwertige Alkohole, ein- oder mehrwertige Carbonsäuren, Hydroxycarbonsäuren, Hydroxyester, Polyetherpolyole, Polyesterpolyole, Polyesteretherpolyole, Polyethercarbonatpolyole, Polyetherestercarbonatpolyole, Polycarbonatpolyole, Polycarbonate, Polytetrahydrofurane (z.B. PolyTHF® der BASF, wie z.B. PolyTHF® 250, 650S, 1000, 1000S, 1400, 1800, 2000), Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C1-C24 Alkyl-Fettsäureester, die im Mittel mindestens 2 OH-Gruppen pro Molekül enthalten. Beispielhaft handelt es sich bei den C1-C23 Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Startersubstanzen können Alkohole, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propargylalkohol, 2-Methyl-2-propanol, 1-tert-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, 1-Dodecanol, 1-Hexadecanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielweise zweiwertige Alkohole (wie beispielsweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielsweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvor genannten Alkohole mit unterschiedlichen Mengen an ε-Caprolacton.

Als einwertige Carbonsäuren eignen sich Methansäure, Ethansäure, Propansäure, Butansäure, Pentansäure, Hexansäure, Heptansäure, Octansäure, Milchsäure, Fluoressigsäure, Chloressigsäure, Bromessigsäure, Iodessigsäure, Difluoressigsäure, Trifluoressigsäure, Dichloressigsäure, Trichloressigsäure, Ölsäure, Salicylsäure und Benzoesäure.

Als mehrwertige Carbonsäuren eignen sich Oxalsäure, Malonsäure, Bernsteinsäure, Glutarsäure, Adipinsäure, Pimelinsäure, Korksäure, Azelainsäure, Sebacinsäure, Trimesinsäure, Fumarsäure, Maleinsäure, 1,10-Decandicarbonsäure, 1,12-Dodecandicarbonsäure, Phthalsäure, Isophthalsäure, Terephthalsäure, Pyromellitsäure und Trimellitsäure.

Als H-funktionelle Startersubstanzen geeignete Hydroxycarbonsäuren sind beispielsweise Ricinolsäure, Glycolsäure, Milchsäure, 3-Hydroxypropionsäure, Äpfelsäure, Zitronensäure, Mandelsäure, Tartronsäure, Weinsäure, Mevalonsäure, 4-Hydroxybuttersäure, Salicylsäure, 4-Hyroxybenzoesäure und Isocitronensäure.

Die H-funktionellen Startersubstanzen können auch aus der Substanzklasse der Polyetherpolyole ausgewählt sein, insbesondere solchen mit einem Molekulargewicht Mn im Bereich von 50 bis 4000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®-Baygal®-, PET®- und Polyether-Polyole der Covestro AG (wie z. B. Desmophen® 3600Z, Desmophen® 1900U, Acclaim® Polyol 2200, Acclaim® Polyol 40001, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Startersubstanzen können auch aus der Substanzklasse der Polyesterpolyole ausgewählt sein, insbesondere solchen mit einem Molekulargewicht Mn im Bereich von 50 bis 4500 g/mol. Als Polyesterpolyole können mindestens difunktionelle Polyester eingesetzt werden. Bevorzugt bestehen Polyesterpolyole aus alternierenden Säure- und Alkoholeinheiten. Als Säurekomponenten können z.B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydride eingesetzt werden. Als Alkoholkomponenten werden z.B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Die resultierenden Polyesterpolyole weisen hierbei terminale Hydroxy und/oder Carboxygruppen auf.

Des Weiteren können als H-funktionelle Startersubstanzen Polycarbonatdiole eingesetzt werden, insbesondere solche mit einem Molekulargewicht Mn im Bereich von 50 bis 4500 g/mol, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z.B. in der EP-A 1359177. Beispielsweise können als Polycarbonatdiole die Desmophen® C-Typen der CovestroAG verwendet werden, wie z.B. Desmophen® C 1100 oder Desmophen® C 2200.

In einer weiteren Ausführungsform der Erfindung können Polyethercarbonatpolyole (z.B. cardyon® Polyole der Fa. Covestro), Polycarbonatpolyole (z.B. Converge® Polyole der Fa. Novomer / Saudi Aramco, NEOSPOL Polyole der Fa. Repsol etc.) und/oder Polyetherestercarbonatpolyole als H-funktionelle Starterverbindungen eingesetzt werden. Insbesondere können Polyethercarbonatpolyole, Polycarbonatpolyole und/oder Polyetherestercarbonatpolyole durch Umsetzung von Alkylenoxiden, bevorzugt Ethylenoxid, Propylenoxid oder deren Mischungen, optional weiteren Co-Monomeren mit $CO_2$ in Gegenwart einer weiteren H-funktionellen Starterverbindung und unter Verwendung von Katalysatoren erhalten werden. Diese Katalysatoren umfassen Doppelmetallcyanid-Katalysatoren (DMC-Katalysatoren) und/oder Metallkomplexkatalysatoren beispielsweise auf Basis der Metalle Zink und/oder Cobalt, wie beispielsweise Zink-Glutarat-Katalysatoren (beschrieben z.B. in M. H. Chisholm et al., Macromolecules 2002, 35, 6494), sogenannte Zink-Diiminat-Katalysatoren (beschrieben z.B. in S. D. Allen, J. Am. Chem. Soc. 2002, 124, 14284) und sogenannte Cobalt-Salen-Katalysatoren (beschrieben z.B. in US 7,304,172 B2, US 2012/0165549 A1) und/oder Mangan-Salen Komplexe. Eine Übersicht über die bekannten Katalysatoren für die Copolymerisation von Alkylenoxiden und $CO_2$ gibt zum Beispiel Chemical Communications 47(2011)141-163. Durch die Verwendung unterschiedlicher Katalysatorsysteme, Reaktionsbedingungen und/oder Reaktionssequenzen erfolgt hierbei die Bildung von statistischen, alternierenden, blockartigen oder gradientenartigen Polyethercarbonatpolyole, Polycarbonatpoylole und/oder Polyetherestercarbonatpolyole. Diese als H-funktionelle Starterverbindungen eingesetzten Polyethercarbonatpolyole, Polycarbonatpoylole und/oder Polyetherestercarbonatpolyole können hierzu in einem separaten Reaktionsschritt zuvor hergestellt werden.

Die H-funktionellen Startersubstanzen weisen im Allgemeinen eine OH-Funktionalität (d.h. Anzahl an für die Polymerisation aktiven H-Atomen pro Molekül) von 1 bis 8, bevorzugt von 2 bis 6 und besonders bevorzugt von 2 bis 4 auf. Die H-funktionellen Startersubstanzen werden entweder einzeln oder als Gemisch aus mindestens zwei H-funktionellen Startersubstanzen eingesetzt. Bevorzugte H-funktionelle Startersubstanzen sind Alkohole mit einer Zusammensetzung nach der allgemeinen Formel (1),

$$HO-(CH2)X-OH \qquad (1)$$

wobei x eine Zahl von 1 bis 20, bevorzugt eine gerade Zahl von 2 bis 20 ist. Beispiele für Alkohole gemäß Formel (VII) sind Ethylenglycol, 1,4-Butandiol, 1,6-Hexandiol, 1,8-Octandiol, 1,10 Decandiol und 1,12-Dodecandiol. Weitere bevorzugte H-funktionelle Startersubstanzen sind Neopentylglykol, Trimethylolpropan, Glycerin und Pentaerythrit.

Weiterhin bevorzugt werden als H-funktionelle Startersubstanzen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylol¬propan, di- und trifunktionelle Polyetherpolyole, wobei das Polyetherpolyol aus einer di- oder tri-H-funktionellen Startersubstanz und Propylenoxid bzw. einer di- oder tri-H-funktionellen Startersubstanz, Propylenoxid und Ethylenoxid aufgebaut ist. Die Polyetherpolyole haben bevorzugt eine OH-Funktionalität von 2 bis 4 und ein Molekulargewicht Mn im Bereich von 62 bis 4500 g/mol und insbesondere ein Molekulargewicht Mn im Bereich von 62 bis 3000 g/mol.

In einer Ausführungsform des erfindungsgemäßen Verfahrens beträgt OH-Funktionalität von 2 bis 6 und ein Molekulargewicht von 40 g/mol bis 2000 g/mol, bevorzugt von 2 bis 4 und bevorzugt von 60 g/mol bis 1000 g/mol auf.

In einer Ausführungsform des erfindungsgemäßen Verfahrens ist die H-funktionelle Startersubstanz ein oder mehrere Verbindung(en) und ausgewählt wird aus der Gruppe bestehend aus Ethylenglycol, Diethylenglycol, Dipropylenglykol 1,3-Butandiol, 1,4-Butandiol 1,1,1-Trimethylolpropan, Glycerin, Pentaerythritol, Sorbitol, Saccarose, Xylitol, 1,2-Propandiol, 1,3-Propandiol, Bernsteinsäure, Adipinsäure, Glutarsäure, Pimelinsäure, Maleinsäure, Phthalsäure, Terephtalsäure, Milchsäure, Zitronensäure und Salicylsäure.

Lacton

Unter Lactonen sind gemäß des technisch-allgemeingültigen Verständnis in der organischen Chemie heterocyclische Verbindungen zu verstehen, wobei Lactone durch intramolekulare Veresterung, d.h. der Umsetzung einer Hydroxyfunktionalität mit einer Carboxyfunktionalität einer Hydroxycarbonsäure gebildet werden. Es handelt sich somit um cyclische Ester mit einem Ringsauerstoff.

In einer Ausführungsform des erfindungsgemäßen Verfahrens ist das Lacon ein 4-gliedriges Ringlacton, 5-gliedriges Ringlacton, 6-gliedrigen Ringlacton, 7-gliedriges Ringlacton und/oder höhergliedriges Ringlacton bevorzugt ein 4-gliedriges Ringlacton.

In einer Ausführungsform des erfindungsgemäßen Verfahrens ist das 4-gliedrige Ringlacton eine oder mehrere Verbindung(en) ist und ausgewählt wird aus der Gruppe bestehend aus Propiolacton, ß-Butyrolacton, Diketen bevorzugt Propiolacton und ß-Butyrolacton.

Brönsted-saurer Katalysator

Gemäß der gängigen, fachlichen Definition sind unter Brönsted-Säuren Stoffe zu verstehen, welche Protonen an einen zweiten Reaktionspartner, die sogenannte Bronsted-Base typischerweise im wässrigen Medium bei 25 °C übertragen können. Im Sinne der vorliegenden Erfindung bezeichnet der Begriff des Brönsted-sauren Katalysators eine nicht-polymere Verbindung, wobei der des Brönsted-sauren Katalysator eine berechnete Molmasse von $\leq$ 1200 g/mol, bevorzugt von $\leq$ 1000 g/mol und besonders bevorzugt von $\leq$ 850 g/mol aufweist.

In einer Ausführungsform des erfindungsgemäßen Verfahrens weist der Brönsted-saure Katalysator einen pKs Wert von kleiner gleich 1, bevorzugt von kleiner gleich 0 auf.

In einer Ausführungsform des erfindungsgemäßen Verfahrens ist der Brönsted-saure Katalysator eine oder mehrere Verbindung(en und ausgewählt wird aus der Gruppe bestehend aus aliphatischen fluorierten Sulfonsäuren, aromatischen fluorierten Sulfonsäuren, Trifluoromethansulfonsäure, Perchlorsäure, Chlorwasserstoffsäure, Bromwasserstoffsäure, Jodwasserstoffsäure, Fluorsulfonsäure, Bis(trifluoromethan)sulfonimid, Hexafluorantimonsäure, Pentacyanocyclo¬pentadien, Pikrinsäure, Schwefelsäure, Salpetersäure, Trifluoressigsäure, Methansulfonsäure, Paratoluolsulfonsäure, aromatische Sulfonsäuren und aliphatische Sulfonsäuren, bevorzugt aus Trifluoromethansulfonsäure, Perchlorsäure, Chlorwasserstoffsäure, Bromwasserstoffsäure, Jodwasserstoffsäure, Fluorsulfonsäure, Bis(trifluoromethan)sulfonimid, Hexafluoran¬timonsäure, Pentacyanocyclopentadien, Pikrinsäure, Schwefelsäure, Salpetersäure, Trifluor¬essig¬säure, Methansulfonsäure, Paratoluolsulfonsäure, Methansulfonsäure und Paratoluolsulfonsäure besonders bevorzugt aus Trifluoromethansulfonsäure, Perchlorsäure, Chlorwasserstoffsäure, Bromwasserstoffsäure, Jodwasserstoffsäure, Bis(trifluoromethan)¬sulfonimid, Pentacyanocyclopentadien, Schwefelsäure, Salpetersäure und Trifluoressigsäure.

In einer Ausführungsform des erfindungsgemäßen Verfahrens wird der Brönsted-saure Katalysator in einer Menge von 0,001 mol-% bis 0,5 mol-% bevorzugt von 0,003 bis 0,4 mol-% und besonders bevorzugt von 0,005 bis 0,3 mol-% bezogen auf die Menge an Lacton eingesetzt.

Lösungsmittel

Gemäß der gängigen fachlichen Definition ist unter einem Lösungsmittel eine oder mehrere Verbindungen zu verstehen, die das Lacton, die H-funktionelle Starterverbindung und/oder den Brönsted-sauren Katalysator lösen ohne jedoch selbst mit dem Lacton, der H-funktionellen Starterverbindung und/oder den Brönsted-sauren Katalysator zu reagieren.

In einer Ausführungsform wird das erfindungsgemäße Verfahren ohne Zusatz eines Lösungsmittels durchgeführt, so dass dieses nach der Herstellung des Polyoxyalkylenpolyesterpolyols nicht in einem zusätzlichen Verfahrensschritt abgetrennt werden muss.

In einer Ausführungsform des erfindungsgemäßen Verfahrens beträgt das molare Verhältnis des Lactons zur H-funktionellen Startersubstanz von 1 zu 1 bis 30 zu 1, bevorzugt von 1 zu 1 bis 20 zu 1.

Schritt i)

In Schritt i) des erfindungsgemäßen Verfahrens wird die H-funktionelle Startersubstanz und der Brönsted-saure Katalysator unter Bildung einer Mischung i) vorgelegt, wobei die Mischung Mischung i) mit geeigneten Mischorganen hergestellt wird.

Schritt ii)

In einer Ausführungsform des erfindungsgemäßen Verfahrens wird das Lacton in Schritt ii) kontinuierlich zur Mischung i) zugegeben

Im erfindungsgemäßen Verfahren ist unter einer kontinuierlichen Zugabe des Lactons ist ein Volumenstrom des Lactons in Schritt ii) von > 0 mL/min zu verstehen, wobei der Volumenstrom während dieses Schritt ii) konstant sein kann oder variiert.

In einer alternativen Ausführungsform des erfindungsgemäßen Verfahrens wird das Lacton in Schritt ii) stufenweise zur Mischung i) zugegeben.

Im erfindungsgemäßen Verfahren ist unter einer stufenweisen Zugabe des Lactons in Schritt ii) mindestens die Zugabe der gesamten Lactonmenge in zwei oder mehr diskreten Portionen des Lactons zu verstehen, wobei der Volumenstrom des Lactons zwischen den oder mehr diskreten Portionen 0 mL/min beträgt und wobei der Volumenstrom des Lactons während einer diskreten Portion konstant sein kann oder variiert.

Bevorzugt wird das Lacton in 1 bis 50 bevorzugt 2 bis 20 diskreten Portionen zugegeben.

Die Bereitstellung der Mischung i) in Schritt i) sowie deren Umsetzung in Schritt ii) erfolgt hierbei in für den Fachmann geeigneten Reaktoren mit geeigneten Mischorganen.

Ein weiterer Gegenstand der vorliegenden Erfindung sind Polyester erhältlich nach dem vorgeschriebenen erfindungsgemäßen Verfahren.

In einer Ausführungsform weist das erfindungsgemäße Polyester ein zahlenmittleren Molekulargewicht von 70 g/mol bis 5000 g/mol, bevorzugt von 80 g/mol bis 4600 g/mol, wobei das zahlenmittlere Molekulargewicht mittels der im Experimentalteil offenbarten Gel-Permeations-Chromatographie (GPC) bestimmt wird.

Ein weiterer Gegenstand der vorliegenden Erfindung ist ein Verfahren zur Herstellung eines Polyurethans durch Umsetzung des erfindungsgemäßen Polyesters mit einem Polyisocyanat.

Das Polyisocyanat kann ein aliphatisches oder aromatisches Polyisocyanat sein. Beispiele sind 1,4-Butylendiisocyanat, 1,5-Pentandiisocyanat, 1,6-Hexamethylendiisocyanat (HDI) bzw. deren Dimere, Trimere, Pentamere, Heptamere oder Nonamere oder Gemische derselben, Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe (polymeres MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1 bis C6-Alkylgruppen. Bevorzugt ist hierbei ein Isocyanat aus der Diphenylmethandiisocyanatreihe.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4''-triisocyanat mit eingesetzt werden.

In einer ersten Ausführungsform betrifft die Erfindung ein Verfahren zur Herstellung eines Polyesters durch Umsetzung einer H-funktionellen Startersubstanz mit einem Lacton in Gegenwart eines Brönsted-sauren Katalysators umfassend folgende Schritte:

    i) Vorlegen der H-funktionellen Startersubstanz und des Brönsted-sauren Katalysators unter Bildung einer Mischung i);
    ii) Zugabe des Lactons zur Mischung i);

wobei das Verfahren ohne Zusatz eines aromatischen Lösungsmittels durchgeführt wird;
und wobei die H-funktionelle Startersubstanz eine OH-funktionelle Startersubstanz und/oder eine COOH funktionelle Startersubstanz ist.

In einer zweiten Ausführungsform betrifft die Erfindung ein Verfahren gemäß der ersten Ausführungsform, wobei das Lacton ein 4-gliedriges Ringlacton, 5-gliedriges Ringlacton, 6-gliedrigen Ringlacton, 7-gliedriges Ringlacton und/oder höhergliedriges Ringlacton ist.

In einer dritten Ausführungsform betrifft die Erfindung ein Verfahren gemäß der zweiten Ausführungsform, wobei das Lacton ein 4-gliedriges Ringlacton ist.

In einer vierten Ausführungsform betrifft die Erfindung ein Verfahren gemäß der dritten Ausführungsform, wobei das 4-gliedrige Ringlacton eine oder mehrere Verbindung(en) ist und ausgewählt wird aus der Gruppe bestehend aus Propiolacton, ß-Butyrolacton, Diketen bevorzugt Propiolacton und ß-Butyrolacton.

In einer fünften Ausführungsform betrifft die Erfindung ein Verfahren gemäß einer der ersten bis vierten Ausführungsform, wobei das Lacton in Schritt ii) kontinuierlich zur Mischung i) zugegeben wird.

In einer sechsten Ausführungsform betrifft die Erfindung ein Verfahren gemäß einer der ersten bis vierten Ausführungsform, wobei das Lacton in Schritt ii) stufenweise zur Mischung i) zugegeben wird.

In einer siebten Ausführungsform betrifft die Erfindung ein Verfahren gemäß einer der ersten bis sechsten Ausführungsform, wobei die H-funktionelle Startersubstanz ein oder mehrere Verbindung(en) ist und ausgewählt wird aus der Gruppe bestehend aus Ethylenglycol, Diethylenglycol, Dipropylenglykol 1,3-Butandiol, 1,4-Butandiol 1,1,1-Trimethylolpropan, Glycerin, Pentaerythritol, Sorbitol, Saccarose, Xylitol, 1,2-Propandiol, 1,3-Propandiol, Bernsteinsäure, Adipinsäure, Glutarsäure, Pimelinsäure, Maleinsäure, Phthalsäure, Terephtalsäure, Milchsäure, Zitronensäure und Salicylsäure.

In einer achten Ausführungsform betrifft die Erfindung ein Verfahren gemäß einer der ersten bis siebten Ausführungsform wobei kein Lösungsmittel verwendet wird.

In einer neunten Ausführungsform betrifft die Erfindung ein Verfahren gemäß einer der ersten bis achten Ausführungsform, wobei der Brönsted-saure Katalysator einen pKs Wert von kleiner gleich 1, bevorzugt von kleiner gleich 0 aufweist.

In einer zehnten Ausführungsform betrifft die Erfindung ein Verfahren gemäß einer der ersten bis neunten Ausführungsform, wobei der Brönsted-saure Katalysator eine oder mehrere Verbindung(en) ist und ausgewählt wird aus der Gruppe bestehend aus aliphatischen fluorierten Sulfonsäuren, aromatischen fluorierten Sulfonsäuren, Trifluoromethansulfonsäure, Perchlorsäure, Chlorwasserstoffsäure, Bromwasserstoffsäure, Jodwasserstoffsäure, Fluorsulfonsäure, Bis(trifluoromethan)sulfonimid, Hexafluorantimonsäure, Pentacyanocyclopentadien, Pikrinsäure, Schwefelsäure, Salpetersäure, Trifluoressigsäure, Methansulfonsäure, Paratoluolsulfonsäure, aromatische Sulfonsäuren und aliphatische Sulfonsäuren, bevorzugt aus Trifluoromethansulfonsäure, Perchlorsäure, Chlorwasserstoffsäure, Bromwasserstoffsäure, Jodwasserstoffsäure, Fluorsulfonsäure, Bis(trifluoromethan)sulfonimid, Hexafluorantimonsäure, Pentacyanocyclopentadien, Pikrinsäure, Schwefelsäure, Salpetersäure, Trifluoressigsäure, Methansulfonsäure, Paratoluolsulfonsäure, Methansulfonsäure und Paratoluolsulfonsäure besonders bevorzugt aus Trifluoromethansulfonsäure, Perchlorsäure, Chlorwasserstoffsäure, Bromwasserstoffsäure, Jodwasserstoffsäure, Bis(trifluoromethan)sulfonimid, Pentacyanocyclopentadien, Schwefelsäure, Salpetersäure und Trifluoressigsäure.

In einer elften Ausführungsform betrifft die Erfindung ein Verfahren gemäß einer der ersten bis zehnten Ausführungsform, wobei der Brönsted-saure Katalysator in einer Menge von 0,001 mol-% bis 0,5 mol-% bevorzugt von 0,003 bis 0,4 mol-% und besonders bevorzugt von 0,005 bis 0,3 mol-% bezogen auf die Menge an Lacton eingesetzt wird.

In einer zwölften Ausführungsform betrifft die Erfindung ein Verfahren gemäß einer der ersten bis elften Ausführungsform, wobei das molare Verhältnis des Lactons zur H-funktionellen Startersubstanz von 1 zu 1 bis 30 zu 1, bevorzugt von 1 zu 1 bis 20 zu 1 beträgt.

In einer dreizehnten Ausführungsform betrifft die Erfindung ein Polyester erhältlich nach einer der ersten bis zwölften Ausführungsform

In einer vierzehnten Ausführungsform betrifft die Erfindung ein Polyester gemäß der dreizehnten Ausführungsform mit einem zahlenmittleren Molekulargewicht von 70 g/mol bis 5000 g/mol, bevorzugt von 80 g/mol bis 4600 g/mol, wobei das zahlenmittlere Molekulargewicht mittels der im Experimentalteil offenbarten Gel-Permeations-Chromatographie (GPC) bestimmt wird.

In einer fünfzehnten Ausführungsform betrifft die Erfindung ein Verfahren zur Herstellung eines Polyurethans durch Umsetzung eines Polyesters gemäß der dreizehnten oder vierzehnten Ausführungsform mit einem Polyisocyanat.

In einer sechzehnten Ausführungsform betrifft die Erfindung ein Verfahren gemäß fünfzehnten Ausführungsform, wobei das Polyisocyanat eine oder mehrere Verbindung(en) ist und ausgewählt wird aus der Gruppe bestehend aus 1,4-Butylendiisocyanat, 1,5-Pentandiisocyanat, 1,6-Hexamethylendiisocyanat (HDI) bzw. deren Dimere, Trimere, Pentamere, Heptamere oder Nonamere oder Gemische derselben, Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe (polymeres MDI), 1,3- und/oder 1,4-Bis-(2-isocyanato-prop-2-yl)-benzol (TMXDI), 1,3-Bis-(isocyanatomethyl)benzol (XDI), Alkyl-2,6-diisocyanatohexanoate (Lysindiisocyanate) mit C1 bis C6-Alkylgruppen.

### Beispiele

Die vorliegende Erfindung wird anhand der nachfolgenden Figuren und Beispiele näher erläutert, ohne jedoch darauf beschränkt zu sein.

*Verwendete Ausgangsstoffe*

cyclische Lactone

β-Propiolacton (Reinheit 98,5 %, Ferak Berlin GmbH)
β -Butyrolacton (Reinheit 98 %, Sigma-Aldrich Chemie GmbH)

H-funktionelle Startersubstanz

Ethylenglycol (EG, >99%, Oqema GmbH)
1,1,1-Trimethylolpropan TMP, (Reinheit >99,8%, Perstorp AB)
Glycerin (Gly, Reinheit 99,5%, Brenntag AG)
1,2 Propandiol (PD, Reinheit >99,8%, Brenntag AG)
Adipinsäure (AS, Reinheit 99,5% (BioXtra), Sigma Aldrich Chemie GmbH)
1,8 Octandiol (OD, Reinheit 98%, Sigma Aldrich GmbH)
PEG-300 (PE, Reinheit Carl Roth GmbH + Co. KG)

Katalysatoren

Trifluormethansulfonsäure (TfOH, Reinheit 98%, Sigma-Aldrich Chemie GmbH)
Schwefelsäure (H2SO4, 95-97%, Sigma Aldrich Chemie GmbH)

Lösungsmittel

Toluol (Tol, >99,5%, Azelis Deutschland GmbH)

*Beschreibung der Methoden:*

Gel-Permeations-Chromatographie (GPC): Die Messungen erfolgten auf einem Agilent 1200 Series (G1311A Bin Pump, G1313A ALS, G1362A RID), Detektion über RID; Elutionsmittel: Tetrahydrofuran (GPC grade), Flussrate 1.0 mL/min bei 40°C Säulentemperatur; Säulenkombination: 2 x PSS SDV Vorsäule 100 Å (5 μm), 2x PSS SDV 1000 Å (5 μm). Zur Kalibrierung wurde das ReadyCal-Kit Poly(styrene) low im Bereich Mp = 266 - 66000 Da von "PSS Polymer Standards Service" verwendet. Als Messaufnahme- und Auswertungssoftware wurde das Programmpaket "PSS WinGPC Unity" verwendet. Der Polydispersitätsindex aus gewichtetem (Mw) und Zahlenmittlerem (Mn) Molekulargewicht der Gel-Permeations-Chromatographie ist definiert als Mw/Mn.

$^1$H-NMR

1) Die Zusammensetzung des Polymers wurde mittels $^1$H-NMR (Firma Bruker, DPX 400, 400 MHz; Pulsprogramm zg30, Wartezeit D1: 10s, 64 Scans) bestimmt. Die Probe wurde jeweils in deuteriertem Chloroform gelöst. Die relevanten Resonanzen im $^1$H-NMR (bezogen auf TMS = 0 ppm) und die Zuordnung der Flächenintegrale (A) ergeben sich wie folgt:

- Poly(hydroxybutyrat) (= Polybutyrolacton) mit Resonanz zwischen 1,30 - 1,08 ppm, Flächenintegral entspricht 3 H-Atomen ($CH_3$ Gruppe)
- Ungesättigte Verunreinigungen (freie Crotonsäure, ungesättigte Endgruppen des Polymers) mit einer Resonanz zwischen 1,87-1,81 + 1,67-1,55 ppm (Summe aus beiden Integralen), Flächenintegral entspricht jeweils 3 H-Atomen ($CH_3$ Gruppe)

Alle genannten Flächen werden auf die Summe von 1,00 integriert, wobei sich nach Multiplikation mit 100 der molare Anteil der ungesättigten Verunreinigungen $x_{ungesättigt}$ [%] ergibt.
Wenn beta-Propiolacton polymerisiert wurde unter den in Tabelle genannten Bedingungen, war die Messgenauigkeit des NMRs für die Integralbestimmung der der Doppelbindungen zu ungenau. Eine Auswertung hat hier nicht erfolgt, der Wert ist aber in allen Fällen <1%.

2) Der Umsatz des Monomers wurde mittels $^1$H-NMR (Firma Bruker, DPX 400, 400 MHz; Pulsprogramm zg30, Wartezeit D1: 10s, 64 Scans) bestimmt. Die Probe wurde jeweils in deuteriertem Chloroform gelöst. Die relevanten Resonanzen im $^1$H-NMR (bezogen auf TMS = 0 ppm) und die Zuordnung der Flächenintegrale (A) ergeben sich wie folgt:

- Poly(hydroxybutyrat) (= Polybutyrolacton) mit Resonanz bei 5,25 (1H), 2,61 (1H), 2,48 (1H) und 1,28 (3H).
- β-Butyrolacton mit Resonanz bei 4,70 (1H), 3,57 (1H), 3,07 (1H) und 1,57 (3H).
- Poly(hydroxypropionat) (= Polypropiolacton) mit Resonanz bei 4,38 (2H) und 2,66 (2H)
- β-Propiolacton mit Resonanz bei 4,28 (2H) und 3,54 (2H)

Der Umsatz wird bestimmt als Integral eines geeigneten Polymersignals geteilt durch die Summe eines geeigneten Polymersignal und Monomersignals. Alle Signale werden auf 1H referenziert.

Infrarotspektroskopie

Der prozentuale Lactonumsatz bezogen auf die eingesetzte Menge an Lacton wurde mittels IR-Spektroskopie bestimmt. Dazu wurden die Produkt-Carbonylbanden (Polypropiolacton, Polybutyrolacton: 1780-1660 cm$^{-1}$) und die Propiolacton-Edukt-Banden (z.B. Edukt-Carbonylbanden 1800 cm$^{-1}$-1830 cm$^{-1}$) bzw. Butyrolacton-Edukt-Banden (1810 cm$^{-1}$-1825 cm$^{-1}$) untersucht.

Der prozentuale Lactonumsatz ergibt sich dann wie folgt:

$$X(Lacton)\ [\%] = F\ (Polylacton)\ /\ [F\ (Polylacton) + F\ (Lacton)] * 100\ (III)$$

In der Formel (III) steht F (Polylacton) für die Fläche der Produkt-Carbonylbande bei 1780-1660 cm$^{-1}$ und F (Lacton) für die Fläche der Edukt Banden bei 1800-1830 cm$^{-1}$ bzw. 1810-1825 cm$^{-1}$

Beispiele 1, 7, 9, 10: Polyester durch stufenweise Lactonzugabe ohne Zugabe eines zusätzlichen Lösungsmittels

In einem Dreihalskolben mit einem Rückflußkühler und KPG Rührer, wurden 7.0 g (81.4 mmol, 0.29 eq.) β-Butyrolacton (BBL), Trifluormethansulfonsäure (0.168 g, 1.12 mmol, 0.004 eq.) und Ethylenglykol (17.3 g, 279 mmol, 1 eq.) vorgelegt (Beispiel 1, Massenangaben für Beispiel 7, 9, 10 siehe Tabelle 1). Die klare Lösung wurde auf 73 °C erwärmt und der Reaktionsprozess wurde mit ATR-IR Spektroskopie verfolgt. Nachdem ein Umsatz des BBL mittels IR Spektroskopie von >70% sichergestellt wurde (100 Minuten), wurde wiederum 7.0 g BBL hinzugefügt, wobei keine Temperaturerhöhung beobachtet werden konnte. Dieses Prozedere (Zugabe von 6-7 g Portionen) wurde wiederholt, bis insgesamt 120.0 g (1.4 mol, 5 eq.) BBL verbraucht worden sind. Der höchste Temperaturanstieg war von 70 °C - 88 °C, wobei die Heizquelle nicht entfernt wurde. Am Ende der Reaktion wird der Glaskolben abgekühlt und das Polyol über GPC-Analyse (Molekulargewichtsverteilung) und $^1$H NMR (Umsatz des β-Lacton, Anteil an ungesättigten Verbindungen) charakterisiert. In allen Fällen konnten nahezu vollständige Umsätze des Monomers erreicht werden (≥ 99 %). Zudem war die Molekulargewichtsverteilungen stets monomodal und es konnte kein Signal des freien Starters detektiert werden. Durch die stufenweise Zugabe des Lactons, ist die stationäre Menge an freiem Lacton erheblich niedriger als im Batchverfahren.

Die Massenangaben der restlichen Versuchsbeispiele können Tabelle 1 entnommen werden.

Tabelle 1:

| Versuchsnummer | m (Butyrolacton) [g] | m (Propiolacton) [g] | m (Starter) [g] | m (TfOH) [g] |
|---|---|---|---|---|
| 1 | 120 | - | 17,3 (EG) | 0,168 |
| 7 | 10 | - | 1,77 (PD) | 0,01 |
| 9 | 10 | - | 1,44 (EG) | 0,028 ($H_2SO_4$) |
| 10 | - | 10 | 1,72 (EG) | 0,017 |

Beispiel 2 (Vergleichsbeispiel): Polyester durch batch-Herstellungsprozess

In einem Vierhalskolben mit einem Rückflußkühler und KPG Rührer, wurden 100 g (1.16 mol, 5 eq.) β-Butyrolacton (BBL), Trifluormethansulfonsäure (0.14 g, 0.933 mmol, 0.004 eq.) und Ethylenglykol (14.4 g, 232 mmol, 1 eq.)

bei 10-15 °C vorgelegt. Anschließend wurde die klare Lösung auf ca. 45-50 °C erhitzt, die Temperatur bei der die Reaktion zu starten beginnt, und der Reaktionsfortschritt mit IR Spektroskopie verfolgt. Nach zwei Stunden wurde trotz Rühren mit einem KPG Rührer ein starker Temperatursprung mit einer Temperaturdifferenz > 60°C beobachtet und deshalb sofort das Ölbad entfernt. Nach Abkühlen auf Raumtemperatur zeigte IR Spektroskopie, dass das BBL vollständig verbraucht wurde. Der Glaskolben wurde abgekühlt und das Polyol über GPC-Analyse (Molekulargewichtsverteilung) und $^1$H NMR (Umsatz des $\beta$-Lacton, Anteil an ungesättigten Verbindungen) charakterisiert. Der Umsatz war beinahe vollständig ($\geq$ 99 %). Zudem war die Molekulargewichtsverteilungen monomodal und es konnte kein Signal des freien Starters detektiert werden. Wird dieser Versuch im kleiner Maßstab durchgeführt (10 g BBL) so tritt der Temperatursprung erst ab 55 °C auf.

Beispiel 3 (Vergleichsbeispiel): Polyester durch batch-Herstellungsprozess

Analog zu Beispiel 2, 0.0125 eq. TfOH (=0.25 mol%), 10 g BBL wurden eingesetzt. Sobald die Innentemperatur von 45 °C überschritten wurde, wurde ein starker Temperaturanstieg mit einer Temperaturdifferenz $\Delta T > 60$ °C beobachtet und die Heizquelle sofort entfernt. Der Glaskolben wurde abgekühlt und das Polyol über GPC-Analyse (Molekulargewichtsverteilung) und $^1$H NMR (Umsatz des $\beta$-Lacton, Anteil an ungesättigten Verbindungen) charakterisiert. Der Umsatz war beinahe vollständig ($\geq$ 99 %). Zudem war die Molekulargewichtsverteilungen monomodal und es konnte kein Signal des freien Starters detektiert werden. Jedoch wurde ein signifikanter Anteil an ungesättigten Nebenprodukten von 10% mittels $^1$H NMR Spektroskopie detektiert. Im originalen Stand der Technik wurden als Minimalmenge 1 mol% von TfOH verwendet, bei einer BBL Menge von 200 $\mu$L. Dieser Versuch würde im >10g Maßstab zu einem größeren, unkontrollierbaren Temperaturanstieg führen und ist aus Sicherheitsgründen nicht durchgeführt worden.-

Beispiel 4 (Vergleichsbeispiel): Polyester durch batch-Herstellungsprozess unter Verwendung eines aromatischen Lösungsmittels

In einem Dreihalskolben mit einem Rückflußkühler und Magnetrührer, wurden 10 g (0,116 mol, 5 eq.) $\beta$-Butyrolacton (BBL) in Toluol vorgelegt. Danach wurde sukzessive Trifluormethansulfonsäure (0.014 g, 0.0933 mmol, 0.004 eq.) und Ethylenglykol (1.44 g, 23.2 mmol, 1 eq.) bei 10-15 °C hinzugegeben. Anschließend wurde die klare Lösung auf ca. 45-50 °C erhitzt und der Reaktionsfortschritt mit IR Spektroskopie verfolgt. Nach 100 Minuten und Erhitzen auf 62 °C wurde trotz Rühren ein Temperatursprung von >20 °C beobachtet und sofort die Heizung des Ölbades abgestellt. Nach Abkühlen auf 64 °C wurde die Reaktion weitergeführt und mittels IR Spektroskopie verfolgt. Am Ende der Reaktion wurde der Glaskolben abgekühlt und das Polyol über GPC-Analyse (Molekulargewichtsverteilung) und $^1$H NMR (Umsatz des $\beta$-Lacton, Anteil an ungesättigten Verbindungen) charakterisiert. Der Umsatz war beinahe vollständig ($\geq$ 99 %). Zudem war die Molekulargewichtsverteilungen monomodal und es konnte kein Signal des freien Starters detektiert werden. Wiederum wurde auf ein direktes Vergleichsbeispiel bei mind. 1 mol% TfOH aufgrund eines unkontrollierbaren Temperaturanstieges und der damit einhergehenden Sicherheitsrisiken verzichtet.

Beispiel 5 (Vergleichsbeispiel): Polyester durch stufenweise Lactonzugabe unter Verwendung eines aromatischen Lösungsmittels

In einem Dreihalskolben mit einem Rückflußkühler und Magnetrührer, wurden 1 g (0.0116 mol, 0.5 eq.) $\beta$-Butyrolacton (BBL), Trifluormethansulfonsäure (0.014 g, 0.0933 mmol, 0.004 eq.), 10 mL Toluol und Ethylenglykol (1.44 g, 23.2 mmol, 1 eq.) bei 10-15 °C vorgelegt. Anschließend wurde die klare Lösung auf ca. 50-76 °C erhitzt und der Reaktionsfortschritt mit IR Spektroskopie verfolgt. Nach zwei Stunden betrug der Umsatz der Reaktion nach IR Spektroskopie lediglich ca. 14% (Gesamtmenge BBL geplant: 10 g) und der Ansatz wurde verworfen, obwohl die portionsweise Zugabe von den restlichen 9 g BBL noch ausstand.

Beispiele 6, 8, 11-13: Polyester durch kontinuierliche Lactonzugabe

In einen 500 mL Planschliffreaktor werden 1. Starter (Menge: Tabelle 2) und 2. Katalysator (Menge: Tabelle 2) bei möglichst kurzem Luftkontakt vorgelegt. Der Reaktor wird verschlossen, der Rührer wird eingeschalten (200-400 U/min) und es wird 10-15 min mit $N_2$ gespült (ca. 1 Blase/s). Es werden 10 g Lacton zugegeben und danach der Thermostat auf 60 °C eingestellt. Die Reaktion wird 60 min gerührt. Anschließend wird eine Probe gezogen und ein IR gemessen. Ist ein Umsatz <50% erfolgt wird auf 70 °C erhöht und weitere 60 min gerührt. Anschließend wird wieder eine Probe gezogen und ein IR gemessen. Ist ein Umsatz >50 % erfolgt, wird die Reaktionstemperatur auf 70 °C erhöht und auf kontinuierliche Dosierung umgestellt (Flußrate Lacton 0,5 g/min).. Anschließend wird 30 min nachgerührt und über IR der Umsatz geprüft. Es wird nachgerührt, bis vollständiger Umsatz stattgefunden hat (IR). Am Ende der Reaktion wird der Planschliffreaktor abgekühlt und das Polyol über GPC-Analyse (Molekulargewichtsverteilung) und $^1$H NMR

(Umsatz des β-Lacton) charakterisiert. In allen Fällen konnten nahezu vollständige Umsätze des Monomers erreicht werden (≥ 99 %). Zudem war die Molekulargewichtsverteilungen stets monomodal und es konnte kein Signal des freien Starters detektiert werden.

Tabelle 2: Übersicht über die eingewogenen Mengen in den Versuchen 6, 8, 11-13.

| Versuchsnummer | m (Propiolacton) [g] | m (Butyrolacton) [g] | m (Starter) [g] | m (TfOH) [g] |
|---|---|---|---|---|
| 6 | - | 96,5 | 3,48 | 0,135 |
| 8 | 81,6 | - | 18,4 | 0,136 |
| 11 | 87,6 | - | 12,4 | 0,146 |
| 12 | 79,4 | - | 20,7 | 0,132 |
| 13 | 70,8 | - | 29,2 | 0,118 |

Beispiele 14-18 (Vergleichsbeispiele): Polyester durch stufenweise/kontinuierliche Lactonzugabe in Gegenwart eines DMC-Katalysators

In einen 300 mL Stahlautoklav werden 1. Starter, 2. Katalysator (Menge: Tabelle 3) und 3. Lösemittel bei möglichst kurzem Luftkontakt vorgelegt. Der Reaktor wird mit N$_2$ gespült. Bei 130 °C wird anschließend das β-Lacton kontinuierlich über zwei Stunden in den Reaktor gefördert. Anschließend wird circa zwei Stunden nachgerührt. Über IR-Analyse der Reaktionslösung wurde gegebenenfalls die Reaktionszeit und Temperatur der Nachrührzeit angepasst um vollen Umsatz des β-Lactons zu gewährleisten. Während dem Zeitraum der kontinuierlichen Dosierung und der Nachrührzeit wird keine Exothermie beobachtet. Bei der Verwendung von niedermolekularen Starterverbindungen (z.B. Ethylenglycol) wird der Starter analog zum Monomer kontinuierlich zu Reaktionslösung zu dosiert.
Am Ende der Reaktion wird der Reaktor abgekühlt, flüchtige Komponenten aus der Reaktionslösung entfernt und das Polyol über GPC-Analyse (Molekulargewichtsverteilung) und $^1$H NMR (Umsatz des β-Lacton) charakterisiert. In allen Fällen konnten nahezu vollständige Umsätze des Monomers erreicht werden (≥ 95 %), jedoch wurden ungesättigte Verunreinigungen im Bereich 2-7% detektiert. Zudem war in allen Fällen keine saubere Einstellung des Molekulargewichts möglich. Die Molekulargewichtsverteilungen waren stets bimodal und neben dem Polyester lag in allen Fällen zusätzlich freier Starter im Produkt vor.
In Versuch 18 wurde kein Lösungsmittel verwendet.

Tabelle 3: Übersicht über die eingewogenen Mengen in den Versuchen 14-18.

| Versuchsnummer | m (Toluol) [g] | m (Butyrolacton) [g] | m (Starter) [g] | m (DMC) [g] |
|---|---|---|---|---|
| 14 | 50 | 18,5 | 1,46 | 0,02 |
| 15 | 50 | 17,1 | 2,92 | 0,02 |
| 16 | 50 | 19,4 | 0,62 | 0,02 |
| 17 | 50 | 18,7 | 1,24 | 0,02 |
| 18 | - | 62,3 | 11,0 | 0,073 |

Tabelle 4: Vergleich der Versuche 1 bis 18.

| Ver-such | Zugabe Lacton[a] | Lacton | H-fkt. Startersubstanz | Katalysator | x(Kat) [mol-%][b] [ppm][c] | Lacton/ Starter [mol/mol] | LM | Mn [g/mol] | PDI | X(Lacton) [%], $^1$H-NMR | $x_{ungesättigt}$ [%] | $\Delta T_{max}$ [°C] |
|---|---|---|---|---|---|---|---|---|---|---|---|---|
| 1 | sw | BBL | EG | TfOH | 0.08[b] 1200[c] | 5/1 | - | 610 | 1.3 | ≥99 | 0 | 18 |
| 2 (Vgl) | Batch | BBL | EG | TfOH | 0.08[b] 1200[c] | 5/1 | - | 690 | 1.2 | ≥99 | 1 | >60 |
| 3 (Vgl) | Batch | BBL | EG | TfOH | 0.25[b] 1200[c] | 5/1 | - | 500 | 1.7 | ≥99 | 10 | >60 |
| 4 (Vgl.) | Batch | BBL | EG | TfOH | 0.08[b] 1200[c] | 5/1 | Toluol | 660 | 1.1 | ≥99 | 1 | >20 |
| 5 (Vgl) | sw | BBL | EG | TfOH | 0.08[b] 1200[c] | 5/1 | Toluol | n.b. | n.b. | n.b. | n.b. | 0 |
| 6 | konti | BBL | EG | TfOH | 0.08[b] 1200[c] | 20/1 | - | 2000 | 1.4 | ≥99 | 0 | 0 |
| 7 | sw | BBL | PD | TfOH | 0.08[b] 1200[c] | 5/1 | - | 780 | 1.2 | ≥99 | 3 | 17 |
| 8 | konti | BPL | Gly | TfOH | 0.08[b] 1200[c] | 5,6/1 | - | 820 | 1.4 | ≥99 | - | 0 |
| 9 | sw | BBL | EG | $H_2SO_4$ | 0.08[b] 2440[c] | 5/1 | - | 600 | 1.4 | ≥99 | 3 | 6 |
| 10 | sw | BPL | EG | TfOH | 0.08[b] 1200[c] | 5/1 | - | 880 | 1.4 | ≥99 | - | 10 |
| 11 | konti | BPL | EG | TfOH | 0.08[b] 1200[c] | 5/1 | - | 920 | 1.5 | ≥99 | - | 0 |
| 12 | konti | BPL | EG | TfOH | 0.08[b] 1200[c] | 3/1 | - | 560 | 1.3 | ≥99 | - | 0 |
| 13 | konti | BPL | AS | TfOH | 0.08[b] 1200[c] | 5/1 | - | 420 | 1.3 | ≥99 | - | 0 |
| 14 (Vgl.) | konti | BBL | OD | DMC | 1000[c] | 21,5/1 | Toluol | 2500+6000 | mm | ≥95 | 7 | 0 |
| 15 (Vgl.) | konti | BBL | OD | DMC | 1000[c] | 10/1 | Toluol | 2000+4500 | mm | ≥95 | 3 | 0 |
| 16 (Vgl.) | konti | BBL | EG | DMC | 1000[c] | 22,5/1 | Toluol | 1300+2500 | mm | ≥95 | 3 | 0 |
| 17 (Vgl.) | konti | BBL | EG | DMC | 1000[c] | 11/1 | Toluol | 2200+4200 | mm | ≥95 | 2 | 0 |

(fortgesetzt)

| Ver-such | Zugabe Lacton[a] | Lacton | H-fkt. Startersubstanz | Katalysator | x(Kat) [mol-%][b] [ppm][c] | Lacton/ Starter [mol/mol] | LM | Mn [g/mol] | PDI | X(Lacton) [%], $^1$H-NMR | $x_{ungesättigt}$ [%] | $\Delta T_{max}$ [°C] |
|---|---|---|---|---|---|---|---|---|---|---|---|---|
| 18 (Vgl.) | konti | BBL | PE | DMC | 1000[c] | 20/1 | - | 2000+4500 | mm | ≥95 | 4 | 0 |

a) Zugabe Lacton, batch, stufenweise (sw), kontinuierlich (konti),
b)+c) Katalysatormenge [mol-%][b] oder [ppm][c] $x_{ungesättigt}$ [%]
d) Anteil der ungesättigten Verunreinigungen
n.b. nicht bestimmt, mm multimodal

**Patentansprüche**

1. Verfahren zur Herstellung eines Polyesters durch Umsetzung einer H-funktionellen Startersubstanz mit einem Lacton in Gegenwart eines Brönsted-sauren Katalysators umfassend folgende Schritte:

    i) Vorlegen der H-funktionellen Startersubstanz und des Brönsted-sauren Katalysators unter Bildung einer Mischung i);
    ii) Zugabe des Lactons zur Mischung i);

    wobei das Verfahren ohne Zusatz eines aromatischen Lösungsmittels durchgeführt wird; und wobei die H-funktionelle Startersubstanz eine OH-funktionelle Startersubstanz und/oder eine COOH funktionelle Startersubstanz ist.

2. Verfahren gemäß Anspruch 1, wobei das Lacton ein 4-gliedriges Ringlacton, 5-gliedriges Ringlacton, 6-gliedrigen Ringlacton, 7-gliedriges Ringlacton und/oder höhergliedriges Ringlacton ist.

3. Verfahren gemäß Anspruch 2, wobei das Lacton ein 4-gliedriges Ringlacton ist.

4. Verfahren gemäß Anspruch 3, wobei das 4-gliedrige Ringlacton eine oder mehrere Verbindung(en) ist und ausgewählt wird aus der Gruppe bestehend aus Propiolacton, ß-Butyrolacton, Diketen bevorzugt Propiolacton und ß-Butyrolacton.

5. Verfahren gemäß einem der Ansprüche 1 bis 4, wobei das Lacton in Schritt ii) kontinuierlich zur Mischung i) zugegeben wird.

6. Verfahren gemäß einem der Ansprüche 1 bis 4, wobei das Lacton in Schritt ii) stufenweise zur Mischung i) zugegeben wird.

7. Verfahren gemäß einem der Ansprüche 1 bis 6, wobei die H-funktionelle Startersubstanz ein oder mehrere Verbindung(en) ist und ausgewählt wird aus der Gruppe bestehend aus Ethylenglycol, Diethylenglycol, Dipropylenglykol 1,3-Butandiol, 1,4-Butandiol 1,1,1-Trimethylolpropan, Glycerin, Pentaerythritol, Sorbitol, Saccarose, Xylitol, 1,2-Propandiol, 1,3-Propandiol, Bernsteinsäure, Adipinsäure, Glutarsäure, Pimelinsäure, Maleinsäure, Phthalsäure, Terephtalsäure, Milchsäure, Zitronensäure und Salicylsäure.

8. Verfahren gemäß einem der Ansprüche 1 bis 7, wobei kein Lösungsmittel verwendet wird.

9. Verfahren gemäß einem der Ansprüche 1 bis 8, wobei der Brönsted-saure Katalysator einen pKs Wert von kleiner gleich 1, bevorzugt von kleiner gleich 0 aufweist.

10. Verfahren gemäß einem der Ansprüche 1 bis 9, wobei der Brönsted-saure Katalysator eine oder mehrere Verbindung(en) ist und ausgewählt wird aus der Gruppe bestehend aus aliphatischen fluorierten Sulfonsäuren, aromatischen fluorierten Sulfonsäuren, Trifluoromethansulfonsäure, Perchlorsäure, Chlorwasserstoffsäure, Bromwasserstoffsäure, Jodwasserstoffsäure, Fluorsulfonsäure, Bis(trifluoromethan)sulfonimid, Hexafluorantimonsäure, Pentacyanocyclopentadien, Pikrinsäure, Schwefelsäure, Salpetersäure, Trifluoressigsäure, Methansulfonsäure, Paratoluolsulfonsäure, aromatische Sulfonsäuren und aliphatische Sulfonsäuren, bevorzugt aus Trifluoromethansulfonsäure, Perchlorsäure, Chlorwasserstoffsäure, Bromwasserstoffsäure, Jodwasserstoffsäure, Fluorsulfonsäure, Bis(trifluoromethan)sulfonimid, Hexafluorantimonsäure, Pentacyanocyclopentadien, Pikrinsäure, Schwefelsäure, Salpetersäure, Trifluoressigsäure, Methansulfonsäure, Paratoluolsulfonsäure, Methansulfonsäure und Paratoluolsulfonsäure besonders bevorzugt aus Trifluoromethansulfonsäure, Perchlorsäure, Chlorwasserstoffsäure, Bromwasserstoffsäure, Jodwasserstoffsäure, Bis(trifluoromethan)sulfonimid, Pentacyanocyclopentadien, Schwefelsäure, Salpetersäure und Trifluoressigsäure.

11. Verfahren gemäß einem der Ansprüche 1 bis 10, wobei der Brönsted-saure Katalysator in einer Menge von 0,001 mol-% bis 0,5 mol-% bevorzugt von 0,003 bis 0,4 mol-% und besonders bevorzugt von 0,005 bis 0,3 mol-% bezogen auf die Menge an Lacton eingesetzt wird.

12. Verfahren gemäß einem der Ansprüche 1 bis 11, wobei das molare Verhältnis des Lactons zur H-funktionellen Startersubstanz von 1 zu 1 bis 30 zu 1, bevorzugt von 1 zu 1 bis 20 zu 1 beträgt.

13. Polyester erhältlich nach mindestens einem der Ansprüche 1 bis 12.

14. Polyester gemäß Anspruch 13 mit einem zahlenmittleren Molekulargewicht von 70 g/mol bis 5000 g/mol, bevorzugt von 80 g/mol bis 4600 g/mol, wobei das zahlenmittlere Molekulargewicht mittels der im Experimentalteil offenbarten Gel-Permeations-Chromatographie (GPC) bestimmt wird.

15. Verfahren zur Herstellung eines Polyurethans durch Umsetzung eines Polyesters gemäß Anspruch 13 oder 14 mit einem Polyisocyanat.

Europäisches
Patentamt

European
Patent Office

Office européen
des brevets

**EUROPÄISCHER RECHERCHENBERICHT**

Nummer der Anmeldung

EP 18 21 5195

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP S60 67446 A (TOA GOSEI CHEM IND) 17. April 1985 (1985-04-17) * Zusammenfassung * * Beispiel 1 * ----- | 1,2,5, 8-15 | INV. C08G63/08 C08G63/82 C08G63/87 |
| A | JP 3 235901 B2 (DAICEL CHEM) 4. Dezember 2001 (2001-12-04) * Zusammenfassung * * Beispiele * ----- | 1-4,7-15 | |
| A | EP 1 647 567 A1 (SOLVAY [BE]) 19. April 2006 (2006-04-19) * batch polymerization; Beispiele * ----- | 1-4,8-14 | |

RECHERCHIERTE SACHGEBIETE (IPC)

C08G
C09J

Der vorliegende Recherchenbericht wurde für alle Patentansprüche erstellt

| Recherchenort | Abschlußdatum der Recherche | Prüfer |
|---|---|---|
| Den Haag | 25. Juni 2019 | Stabel, Andreas |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes
    Dokument

EPO FORM 1503 03.82 (P04C03)

EP 3 670 569 A1

## ANHANG ZUM EUROPÄISCHEN RECHERCHENBERICHT
## ÜBER DIE EUROPÄISCHE PATENTANMELDUNG NR.

EP 18 21 5195

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-06-2019

| Im Recherchenbericht angeführtes Patentdokument | | Datum der Veröffentlichung | Mitglied(er) der Patentfamilie | | Datum der Veröffentlichung |
|---|---|---|---|---|---|
| JP S6067446 | A | 17-04-1985 | JP | H0321536 B2 | 22-03-1991 |
| | | | JP | S6067446 A | 17-04-1985 |
| JP 3235901 | B2 | 04-12-2001 | JP | 3235901 B2 | 04-12-2001 |
| | | | JP | H06293824 A | 21-10-1994 |
| EP 1647567 | A1 | 19-04-2006 | AT | 388183 T | 15-03-2008 |
| | | | CN | 101056912 A | 17-10-2007 |
| | | | EP | 1647567 A1 | 19-04-2006 |
| | | | EP | 1809684 A1 | 25-07-2007 |
| | | | JP | 4966198 B2 | 04-07-2012 |
| | | | JP | 2008517089 A | 22-05-2008 |
| | | | US | 2008033138 A1 | 07-02-2008 |
| | | | WO | 2006040355 A1 | 20-04-2006 |

EPO FORM P0461

Für nähere Einzelheiten zu diesem Anhang : siehe Amtsblatt des Europäischen Patentamts, Nr.12/82

17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5032671 A
- WO 2008104723 A1
- GB 1201909 A
- EP 1359177 A
- US 7304172 B2
- US 20120165549 A1

**In der Beschreibung aufgeführte Nicht-Patentliteratur**

- **COUFFIN et al.** *Poly. Chem,* 2014, vol. 5, 161
- **M. H. CHISHOLM et al.** *Macromolecules,* 2002, vol. 35, 6494
- **S. D. ALLEN.** *J. Am. Chem. Soc.,* 2002, vol. 124, 14284
- *Chemical Communications,* 2011, vol. 47, 141-163